# EUROPEAN PATENT APPLICATION

(11) **EP 4 772 403 A1**
(43) Date of publication of application: **08.07.2026**
(21) Application number: 25150423.9
(22) Date of filing: 07.01.2025
(51) Int. Cl.: B60R 16/02

(54) **DEVICE FOR FASTENING A COMPONENT TO A STRUCTURAL COMPONENT WITH GEOMETRIC DAMPING**

(71) Applicant: Newfrey LLC, New Britain, CT 06053 (US)
(72) Inventor: Kempf, Christian, 35394 Gießen (DE); Brumm, Mathias, 35394 Gießen (DE); Albach, Jens, 35394 Gießen (DE)
(74) Representative: Haarpatent Patentanwälte Krämer Meyer

(57) **Abstract**

A device (1) for attaching a component to a structural component, comprising a fastening element (2) for fastening the device (1) to the structural component and a holding element (3) for holding the component. The fastening element (2) comprises a base body (4) that defines a cavity (9) which is accessible from at least one insertion opening (10) provided in a bottom side of the base body (4). Furthermore, the fastening element (2) comprises at least one fastening part (12) that projects inwardly from the base body (4) into the cavity (9). The holding element (3) is arranged on a first side wall (5) of the base body (4). The underside of the base body (4) forms a contact surface (17) for contact with the structural component, which, when viewed in the longitudinal section of the fastening element (2), runs from the first side wall (5) to a second side wall (6) opposite the first, corresponding to an involute.

## Description

The invention refers to a device for attaching a component to a structural component, with a fastening element for attaching the device to the structural component and a holding element for holding the component. Furthermore, an arrangement is described with such a device and a structural component.

There are devices known to be used in the automotive industry for holding and positioning vehicle components, such as electrical components, wiring harnesses, etc. Such devices can, for example, be attached to a structural component, such as a vehicle body, using studs. In order to be able to hold vehicle components, the devices comprise holding elements of a flat design that are connected to a fastening element in a reversible or irreversible manner. The fastening element is used to hold the holding element and to attach it to the vehicle body.

DE 10 2012 111 886 B3 describes a device with a fastening element and a holding element, wherein the elements are manufactured in one piece. The fastening element is used to receive a stud, wherein a stud receiver extends along a longitudinal axis of the fastening element so that the stud can be received in different longitudinal positions in the stud receiver. This makes it possible to compensate for tolerances. However, the problem is that the stud has a lot of play in the longitudinal direction and it is not possible to ensure that it is firmly attached. In addition, several fastening elements arranged next to each other can come into contact with each other and lever each other loose. Especially since tilting movements of the device are not compensated for.

A fastening element for fastening a conduit element to a stud of a vehicle is known from DE 10 2016 015 089 A1.

EP 1 873 882 A1 discloses a fastening device having a fastening element that can be flexibly connected to a holding element.

DE 10 2018 128 682 A1 describes a device with a fastening element and a holding element, wherein the fastening element can be attached to a vehicle body by means of a stud and the holding element is used to hold a cable or the like. The fastening element and the holding element can be connected to one another in a reversible manner. A bearing surface formed by the fastening element for bearing against the bodywork can compensate for tolerances.

One problem with the known devices is uncontrollable movement of a device attached to a structural component. This is because an eccentrically received vehicle component, such as a cable harness, exerts a momentum on the device. This tilts the device in the direction of the vehicle component, e.g. the cable harness. The fastening element shown in DE 10 2018 128 682 A1 comprises a curved contact surface that is designed symmetrically and achieves uniform damping behavior. Such damping relaxes over time and loses its damping behavior. This will result in damage to the vehicle components.

The object of the invention is to provide a device that ensures sufficient and lasting damping despite an eccentric attachment of a vehicle component.

The above-mentioned object is achieved by the invention defined in independent claim 1. Preferred embodiments are described in the dependent claims.

A device for fastening a component to a structural component is provided, comprising a fastening element designed for fastening the device to the structural component and a holding element designed for holding the component, wherein the fastening element comprises a base body defining a cavity that is accessible from at least one insertion opening provided in a bottom side of the base body, and with at least one fastening part projecting inwards from the base body into the cavity, wherein the holding element is arranged on a first side wall of the base body, wherein the underside of the base body forms a contact surface adapted to contact the structural component, said contact surface, when viewed in the longitudinal section of the fastening element, extends from the first side wall to a second side wall lying opposite the first with an involute profile. In other words, the contact surface extends from the first wall to the second wall, following an involute curve. The embodiment of the contact surface according to the invention allows for the attainment of progressive damping, which is more effective the more a fastening element attached to a structural component tilts in the direction of the holding element. The curved contact surface and the damping achieved by it can be referred to as geometric damping, because the damping is achieved by the geometry of the fastening element, in particular its contact surface.

In one preferred embodiment, the contact surface extends in a curved profile along the side walls connecting the second and third side walls, as seen in the longitudinal section of the fastening element, wherein the curved profile flattens out from the first side wall to the second side wall. The contact surface is not evenly distributed over its course, in particular from the first to the second side wall, but rather runs like an involute, in particular over the third and fourth side walls. The curvature of the involute profile is preferably greatest near the first side wall and decreases in the direction of the second side wall opposite it.

The contact surface is formed in particular by free ends of the first, second, third and fourth side surfaces of the base body, wherein a length of the second side wall is less than a length of the first side wall. The lengths of the third and fourth side walls are preferably, at least partially, longer than those of the first and second side walls.

To attach the device to the structural component, the component can have a stud-like geometry, which can be introduced into the cavity of the base body. Of course, the connection between the device, in particular the fastening element, and the structural component can also be realized by other means. At least one fastening part is present in the cavity of the fastening element, in particular for the purpose of forming a reversible form-fitting connection with the stud-like geometry. In this case, the fastening part can be designed, for example, as a latching or snap-in element that is provided, for example, as a bar and produces a detachable form fit with a latching element of the structural component.

In a further embodiment two locking fingers are designed as fastening parts and are arranged on opposite inner walls of the cavity. Such locking fingers can form a releasable form-fit with a latching element of the structural component, in particular a stud. For this purpose, the fastening part can comprise corresponding locking surfaces that engage behind the locking surfaces of the stud. In particular, the fastening parts designed as locking fingers can comprise free ends that are concave and project towards the center axis of the cavity. This allows a firmly interlocking connection to be achieved with a stud, for example.

The guidance of a stud-like geometry in the cavity can be supported by the first and second opposing side walls of the base body being designed in the shape of an arc, at least partially, so that a tubular section is formed along the longitudinal axis of the cavity, at least partially. A stud, for example, can be guided in the cavity with essentially no play.

In one design, the fastening element and the holding element are designed as a single piece. The device and its components can be manufactured in a plastic injection molding process, for example. However, it may also be advantageous if the holding element can be reversibly attached to the fastening element using a latching or snap-on connection. This makes it possible to first mount the fastening element on the structural component before attaching the holding element to the fastening element. This can be advantageous in confined mounting areas. In one embodiment, the holding element can be arranged on the first side wall of the base body by means of bar-like elements. This has the advantage that the gap between the fastening element and the holding element can be used for winding straps or the like, which can serve to fasten a vehicle component to the holding element.

In order to achieve a fastening of the fastening element to the structural component that comprises as little tolerance as possible, elastically designed feet can be provided on a second side wall near the insertion opening, which run at an angle to a longitudinal axis of the base body. Advantageously, the free ends of the feet extend beyond a plane that runs through the contact surface and is oriented perpendicular to the longitudinal axis.

In one embodiment, the fastening element is advantageously designed to be mirror-symmetrical to a plane that runs axially through its longitudinal axis. This simplifies the production of the device, in particular of the fastening element.

The invention also refers to an arrangement comprising a previously explained device and a structural component, in particular a vehicle body or part thereof, wherein the device is attached to the structural component by means of a stud on the structural component. The embodiment according to the invention can prevent a tilting movement of a vehicle component attached to the holding element. The vehicle component can be attached to the holding element in particular by means of straps. In all other respects, reference is made to the previously explained embodiments and advantages of the device.

The invention will be explained in more detail below, with reference to an example of the invention shown in the drawing. It shows
- Figure 1: a perspective view of a preferred device,
- Figure 2: a side view of a preferred device,
- Figure 3: a sectional view of figure 2 and
- Figure 4: a plan view of a preferred device.

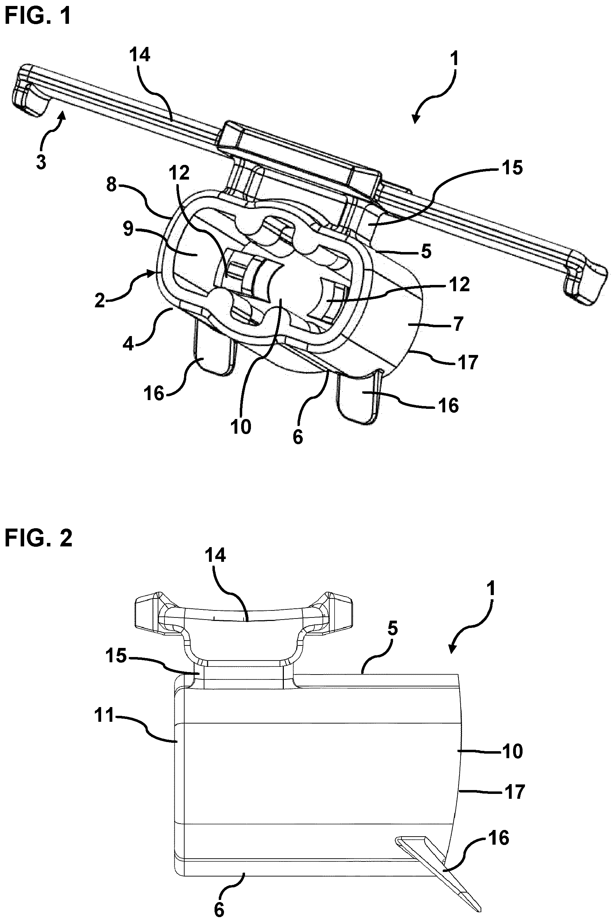

As can be seen in figure 1, a preferred device 1 comprises, in addition to a fastening element 2, a holding element 3. The fastening element 2 and the holding element 3 can be manufactured in a common plastic injection molding process. For instance, the fastening element 2 and the holding element 3 are a one-piece element. In the embodiment shown, the fastening element 2 is formed as a rectangular cross-section base body 4 comprising four side walls, namely a first, second, third and fourth side wall 5, 6, 7, 8. The corners of the side walls 5, 6, 7, 8 are rounded. The base body 4 surrounds a cavity 9 that extends along a longitudinal axis of the base body 4. The cavity 9 is accessible via a first opening, which, for the purposes of the invention, is referred to as an insertion opening 10. The insertion opening 10 is located on a lower side of the base body 4 and serves to receive a stud-like geometry, which is not shown and is attached to a structural component. The structural component, which is also not shown, can be, in particular, a vehicle body. The stud is received by the insertion opening 10 in the axial direction of the longitudinal axis of the base body 4.

In the embodiment shown, a second opening 11 is provided opposite the insertion opening 10 in the top side of the base body 4. The fastening element 2 can be connected to a further element via the second opening 11, for example.

The wall thickness of the base body 4 can, but does not have to be designed to be constant. The two opposing first and second side walls 5, 6 form the longitudinal sides of the rectangular base body 4 and each comprise a central convolution 12 running axially to the longitudinal axis. The cross-section of the convolution 12 is in the shape of an arc so that a tubular section running along the longitudinal axis is formed in the cavity 9. Such tubular sections or areas can serve to guide the stud that can be inserted into the cavity 9 and to compensate for tolerances. The shoulders or undercuts formed in this way can also act as snap-in or snap-open elements.

As can be clearly seen in figure 1, the third and fourth side walls 7, 8 are designed to be slightly curved. This allows the size of the fastening element 2 to be reduced and a compact design to be achieved.

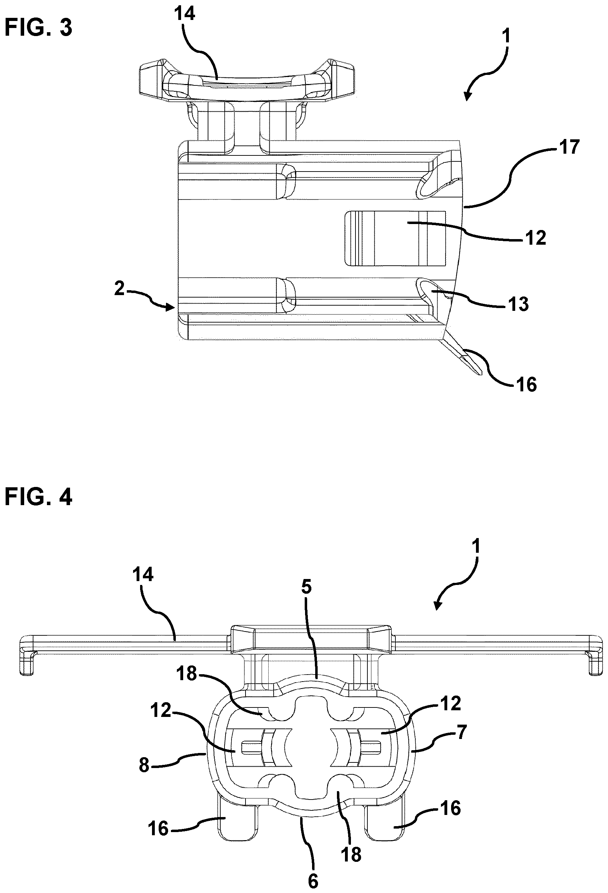

In the illustrated design, two fastening parts 12 designed as locking fingers project into the cavity 9, the positioning of which can be clearly seen in figures 1 and 4. The fastening parts 12 are attached to two opposite inner walls of the base body 4, in particular the third and fourth side walls 7, 8. The fastening parts 12 are each fixed to the inner wall at one of their ends and project with their free ends in the direction of the center axis of the cavity 9. The longitudinal axes running through the fastening parts 12 are inclined to the longitudinal center axis of the cavity 9, so that the free ends point in the direction of the second opening 11 in the upper side. The fastening parts 12 can be designed to be elastically flexible in the radial direction, i.e. towards and away from the center axis of the base body 4. The free ends of the fastening parts 12, which project in the direction of the center axis of the cavity 9, are advantageously concave and form a locking surface that can interact with a convex locking surface of the stud. As a result, the fastening parts 12 can form an even better form-fitting connection with the stud, for example by engaging behind a stud head.

In the lower area of the cavity 9, near the insertion opening 10, there may be a chamfer 13 that leads to a widening of the diameter of the cavity 9 towards the insertion opening 10, see figure 3. Such a chamfer 13 can, for example, serve as an aid for inserting the stud into the cavity 9 and compensate for tolerances.

The holding element 3 is arranged on the first side wall 5 of the base body 4. In the design shown, the holding element 3 is located near the second opening 11, that is, in the upper third of the first side wall 5. The holding element 3 consists of a rectangular support 14 that is attached to the first side wall 5 of the base body 4 by two bar-like elements 15. The support 14 is oriented transversely to the longitudinal axis of the fastening element 2 and can comprise a recess running axially to its longitudinal axis or be designed in the shape of a half-shell. The support 14 can include bar-like elements, recesses or the like that facilitate the holding and fastening of a vehicle component that is not shown. Such vehicle components may include, for example, but are not limited to, lines, wiring harness components or cable harnesses that are held in place by means of straps that go around the component on the outside.

In the embodiment, the fastening element 2 and the holding element 3 are designed as a single piece. However, it may also be provided that the holding element 3 can be detachably fastened to the fastening element 2 by means of latching, plug-in or snap-in connections.

On the second side wall 6, which is opposite the first side wall 5, feet 16 are arranged near the insertion opening 10. Each foot 16 is attached near the third and fourth side walls 7, 8. The feet 16 have a rectangular shape, the first end of which is attached to the second side wall 6 and the free end of which protrudes at an angle from the side wall 6. This means that one longitudinal axis of a foot 16 is inclined to the longitudinal axis of the base body 4 in such a way that the free ends of the feet 16 project beyond a plane running through the underside of the base body 4 and oriented transversely to the longitudinal axis of the base body 4. The feet 16 are preferably designed to be elastic, so that they are resilient in the axial direction of the longitudinal axis of the base body 4.

The curved underside of the base body 4 can be seen in figures 2 and 3. The underside forms a contact surface 17, with which the device 1, in particular the fastening element 2, comes into operative contact with a surface of the structural component not shown. A stud can be used to fasten the device 1 to a structural component. The stud protrudes vertically from the structural component, wherein the device 1 is placed on the stud with the fastening element 2 in the axial direction. This guides the stud through the insertion opening 10 into the cavity 9 and brings it into its fastening position, in which the fastening parts 12 form a form fit with the stud. The insertion of the stud into the insertion opening 10 and, in particular, the latching of the stud behind the fastening parts 12 is effected in particular against a spring force of the feet 16. This causes a force to act on the fastening element 2 against the insertion direction, so that the fastening parts 12 are pressed against the locking surface of the stud and the form-fit connection has a low tolerance. In addition, the feet 16 press the fastening element 2 onto the area of the contact surface 17 with the greatest damping near the first side wall 5. In its operating position, the contact surface 17 rests at least partially on the surface of the structural component.

The contact surface 17 is formed by the free ends of the side walls 5, 6, 7, 8, or more precisely by their corresponding edges. As can be clearly seen in figure 3, the contact surface 17 runs from the first side wall 5 to the second side wall 6 opposite it in the longitudinal section of the fastening element 2, corresponding to an involute. This means that the contact surface 17 comprises a basically asymmetrical convex curvature. The curvature is most pronounced near the first side wall 5 and decreases in the direction of the second side wall 6 opposite to it. For the purposes of the invention, an involute is a curved shape of the contact surface 17 that essentially follows the free ends of the third and fourth side walls 7, 8 and extends in particular from the first to the second side wall 5, 6. This means that essentially the free ends, in particular the edges of the third and fourth side walls 7, 8 of the fastening element 2, are designed in a curved shape in the axial direction of the longitudinal axis of the fastening element 2, so that they follow an involute. Such an involute is created when, in principle, a rolling straight line is unrolled on a base circle. The curve that arises from this determines the shape of the involute, which is less curved the longer it is. That means it becomes flatter and flatter the further it is from the base circle. The base circle is advantageously located schematically near the first side wall 5, in particular at the point where this intersects with the third and fourth side walls 7, 8, respectively. It has been found to be advantageous if the diameter of the base circle, which serves as a theoretical rolling body, is not smaller than approximately 2,7 to 3,7 mm and not larger than 18,9 to 19,9 mm. It should be mentioned, however, that the diameter depends on the size of the advantageous device 1 and its use. It is, of course, known to those skilled in the art that the diameter of a base circle or rolling body also changes relative to the overall size of the device 1, in particular the fastening element 2.

In the embodiment shown, the second side wall 6 is designed to be shorter than the first side wall 5, wherein the two curved third and fourth side walls 7, 8, in particular their areas of greatest curvature, are designed to be longer and extend beyond the free ends of the first and second side walls 5, 6, at least partially. The free ends of the first and second side walls 5, 6, in particular their edges, can be designed to be curved, but this is not necessary.

If a vehicle component, e.g. a cable harness, is attached to the holding element 3 by means of straps and the fastening element 2 is in turn attached to a structural component by means of a stud, the weight of the holding element 3 exerts a force in the direction of the structural component. The lever exerts a moment on the fastening element 2, so that the contact surface 17 does not rest fully on the surface of the structural component, but tilts in the direction of the holding element 3. The advantageous design of the contact surface 17 can dampen this tilting. Advantageously, the tilting is dampened more the more the holding element 3 tilts in the direction of the structural component. This progressive dampening behavior is not known from the prior art and has the advantage that the dampening behavior does not decrease over time. Particularly in combination with the advantageously attached and designed feet 16, efficient damping can be achieved. Especially since there are no interfering contours that would make it difficult to attach the device 1. Furthermore, the advantageous solution saves space and is inexpensive to manufacture.

The solution according to the invention provides a device with a quasi-ideal damping behavior, so that no vibrations can affect a vehicle component, such as sensitive cable harnesses. Damage to the vehicle component is prevented.

One embodiment may provide for the presence in the cavity 9 of abutment portions 18 that run axially along the longitudinal axis of the cavity 9 and form axial stops for inserted studs. The abutment portions 18 may be formed from bead-like strands. In the embodiment shown in figure 4, two bead-like strands are present on the inner wall of the cavity 9, which is formed by the first side wall 5, and two are also present on the opposite inner wall, which is formed by the second side wall 6. As can be seen in Figure 4, the strands per side wall can be spaced at different distances from each other. That is to say, one pair of strands, for example the lower pair near the insertion opening 10, comprises a greater distance between each other than the following and axially spaced pair. The different distances between the strands can form shoulders in the cavity 9, which can act as an axial stop for an inserted stud. Thus, several axial stops can be formed for differently designed studs by the abutment portions 18. The abutment portions 18 can also serve to correctly guide the inserted studs axially.

## Claims

1. Device (1) for fastening a component to a structural component, comprising a fastening element (2) designed for fastening the device (1) to the structural component and a holding element (3) designed for holding the component, wherein the fastening element (2) comprises a base body (4) defining a cavity (9) that is accessible from at least one insertion opening (10) provided in a bottom side of the base body (4), and with at least one fastening part (12) projecting inwards from the base body (4) into the cavity (9), wherein the holding element (3) is arranged on a first side wall (5) of the base body (4), wherein the underside of the base body (4) forms a contact surface (17) adapted to contact the structural component, said contact surface (17), when viewed in the longitudinal section of the fastening element (2), extends from the first side wall (5) to a second side wall (6) lying opposite the first with an involute profile.

2. Device (1) according to claim 1, **characterized in that** the contact surface (17) extends in a curved profile along the side walls (7, 8) connecting the second and third side walls (5, 6), as seen in the longitudinal section of the fastening element (2), wherein the curved profile flattens out from the first side wall (5) to the second side wall (6).

3. Device (1) according to one of the preceding claims, **characterized in that** the contact surface (17) is formed by free ends of the first, second, third and fourth side surfaces (5, 6, 7, 8) of the base body (4) and a length of the second side wall (6) is less than a length of the first side wall (5).

4. Device (1) according to one of the preceding claims, **characterized in that** a curvature of the involute profile is greatest near the first side wall (5) and decreases in the direction of the second side wall (6) lying opposite it.

5. Device (1) according to one of the preceding claims, **characterized in that** two locking fingers are present in the cavity (9) as fastening parts (12) arranged on opposite inner walls of the cavity (9).

6. Device (1) according to claim 5, **characterized in that** free ends of the fastening parts (12) that project in the direction of the center axis of the cavity (9) are concave.

7. Device (1) according to one of the preceding claims, **characterized in that** the first and second opposing side walls (5, 6) of the base body (4) are designed in the shape of an arc of a circle, at least in some regions, so that a tubular section is formed along the longitudinal axis of the cavity (9), at least in some regions.

8. Device (1) according to one of the preceding claims, **characterized in that** the fastening element (2) and the holding element (3) are designed in one piece.

9. Device (1) according to one of the preceding claims 1 to 7, **characterized in that** the holding element (3) can be reversibly fastened to the fastening element (2) by way of latching or snap-in connections.

10. Device (1) according to one of the preceding claims 1 to 8, **characterized in that** the holding element (3) is arranged on the first side wall (5) of the base body (4) by way of bar-like elements.

11. Device (1) according to one of the preceding claims, **characterized in that** elastically designed feet (16) are attached to the second side wall (6) near the insertion opening (10), which feet (16) run at an angle to a longitudinal axis of the base body (4).

12. Device (1) according to one of the preceding claims, **characterized in that** the free ends of the feet (16) project beyond a plane running through the contact surface (17) and oriented transversely to the longitudinal axis.

13. Device (1) according to one of the preceding claims, **characterized in that** the fastening element (2) is designed to be mirror-symmetrical with respect to a plane that runs axially through its longitudinal axis.

14. Arrangement comprising a device (1) according to one of the previous claims 1 to 13 and a structural component, wherein the device (1) is attached to the structural component by means of a stud present on the structural component.

15. Arrangement according to claim 14, **characterized in that** at least one component is attached to the holding element (3) by means of straps.
